# EUROPEAN PATENT APPLICATION

(11) **EP 3 952 436 A1**
(43) Date of publication of application: **09.02.2022**
(21) Application number: 19922478.3
(22) Date of filing: 02.04.2019
(51) Int. Cl.: H04W 28/18, H04W 4/40, H04W 84/18

(54) **USER DEVICE AND COMMUNICATION METHOD**

(71) Applicant: NTT DOCOMO, INC., Chiyoda-Ku Tokyo 100-6150 (JP)
(72) Inventor: YOSHIOKA, Shohei, Tokyo 100-6150 (JP); NAGATA, Satoshi, Tokyo 100-6150 (JP); WANG, Huan, Beijing, 100190 (CN)
(74) Representative: Hoffmann Eitle
(86) International application number: PCT/JP2019/014709
(87) International publication number: WO 2020/202481

(57) **Abstract**

A user apparatus is provided that includes a control unit configured to determine an MCS (Modulation and Coding Scheme) table and a transmission unit configured to perform sidelink transmission in accordance with the MCS table.

## Description

### TECHNICAL FIELD

The present invention relates to a user apparatus and a communication method in a wireless communication system.

### BACKGROUND ART

In LTE (Long Term Evolution) and LTE successor systems (e.g., LTE-A (LTE Advanced), NR (New Radio) (also referred to as 5G)), a sidelink (also referred to as D2D (Device to Device)) technology, in which communication apparatuses communicate directly with each other without using a base station gNB, is being discussed (e.g., Non-Patent Document 1).

Further, realization of V2X (Vehicle to Everything) is being discussed and specifications are being developed. Here, V2X is a part of ITS (Intelligent Transport Systems) and is a generic name (collective name) for: V2V (Vehicle to Vehicle) referring to a form of communication performed between vehicles; V2I (Vehicle to Infrastructure) referring to a form of communication performed between a vehicle and a road-side unit (RSU) that is installed on roadside; V2N (Vehicle to Nomadic device) referring to a form of communication performed between a vehicle and a driver's mobile terminal; and V2P (Vehicle to Pedestrian) referring to a form of communication performed between a vehicle and a pedestrian's mobile terminal.

Further, in NR release 15, MCS (Modulation and Coding Scheme) tables for data transmission are supported (Non-Patent Document 2).

### RELATED ART DOCUMENTS

### [NON-PATENT DOCUMENTS]

[Non-Patent Document 1] 3GPP TS 36.213 V14.3.0 (2017-06)
[Non-Patent Document 2] 3GPP TS 38.214 V15.4.0 (2018-12)

### SUMMARY OF THE INVENTION

### [TECHNICAL PROBLEM]

However, NR-V2X sidelink does not specify how MCS tables may be used.

The present invention has been made in view of the above, it is an object of embodiments of the present invention to provide a technique that specifies how to use MCS tables in direct communications between terminals. It should be noted that the present invention is not limited to the communications between terminals in V2X, but may be applied to any terminal.

### [SOLUTION TO PROBLEM]

According to the disclosed technique, a user apparatus is provided. The user apparatus includes a control unit configured to determine an MCS table and a transmission unit configured to perform sidelink transmission in accordance with the MCS table.

### [ADVANTAGEOUS EFFECTS OF INVENTION]

According to the disclosed technique, provided is a technique that specifies how MCS tables may be used in direct communications between terminals.

### BRIEF DESCRIPTION OF THE DRAWINGS

Fig. 1 is a drawing illustrating four types of sidelink transmission modes in NR-V2X.
Fig. 2A is a drawing illustrating an MCS table.
Fig. 2B is a drawing illustrating an MCS table.
Fig. 2C is a drawing illustrating an MCS table.
Fig. 2D is a drawing illustrating an MCS table.
Fig. 2E is a drawing illustrating an MCS table.
Fig. 2F is a drawing illustrating an MCS table.
Fig. 2G is a drawing illustrating an MCS table.
Fig. 2H is a drawing illustrating an MCS table.
Fig. 3 is drawing illustrating an example of the functional structure of a base station apparatus 10 according to an embodiment of the present invention.
Fig. 4 is drawing illustrating an example of the functional structure of a user apparatus 20 according to an embodiment of the present invention.
Fig. 5 is a drawing illustrating an example of hardware structures of a base station apparatus 10 and a user apparatus 20 according to an embodiment the present invention.

### DETAILED DESCRIPTION OF THE PREFERRED EMBODIMENTS

In the following, referring to the drawings, one or more embodiments of the present invention (present embodiments) will be described. It should be noted that the embodiments described below are just examples. Embodiments of the present invention are not limited to the following embodiments.

### (Sidelink transmission mode)

Sidelink transmission modes in NR-V2X will be described.

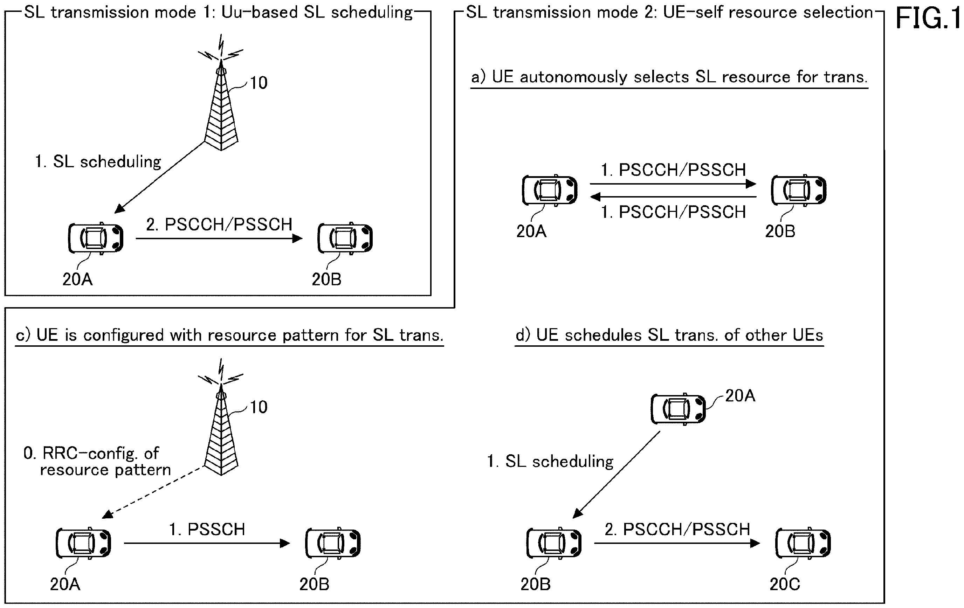

Fig. 1 is a drawing illustrating four types of sidelink transmission modes in NR-V2X.

In NR-V2X sidelink transmission mode 1, a user apparatus 20A transmits PSCCH (Physical Sidelink Control Channel)/PSSCH (Physical Sidelink Shared Channel) to a user apparatus 20B based on SL (Sidelink) scheduling by a base station apparatus 10.

In NR-V2X sidelink transmission mode 2, PSCCH/PSSCH transmission is performed based on the resource selection of the user apparatus itself. The NR-V2X sidelink transmission mode 2 is further divided into subdivided modes. In NR-V2X sidelink transmission mode 2-a, the user apparatus 20A transmits PSCCH/PSSCH to the user apparatus 20B based on the resource selection of the user apparatus 20A itself, and the user apparatus 20B transmits PSCCH/PSSCH to the user apparatus A based on the resource selection of the user apparatus 20B itself. In NR-V2X sidelink transmission mode 2-c, the user apparatus 20A transmits PSSCH to the user apparatus 20B according to a resource pattern "RRC-config" that is indicated by the base station apparatus 10 or is specified in the specifications.

In NR-V2X sidelink transmission mode 2-d, the user apparatus 20A transmits SL scheduling to the user apparatus 20B in order to perform scheduling for transmission of the user apparatus 20B, and the user apparatus 20B transmits PSCCH/PSSCH to the user apparatus 20A based on the scheduling.

### (MCS table)

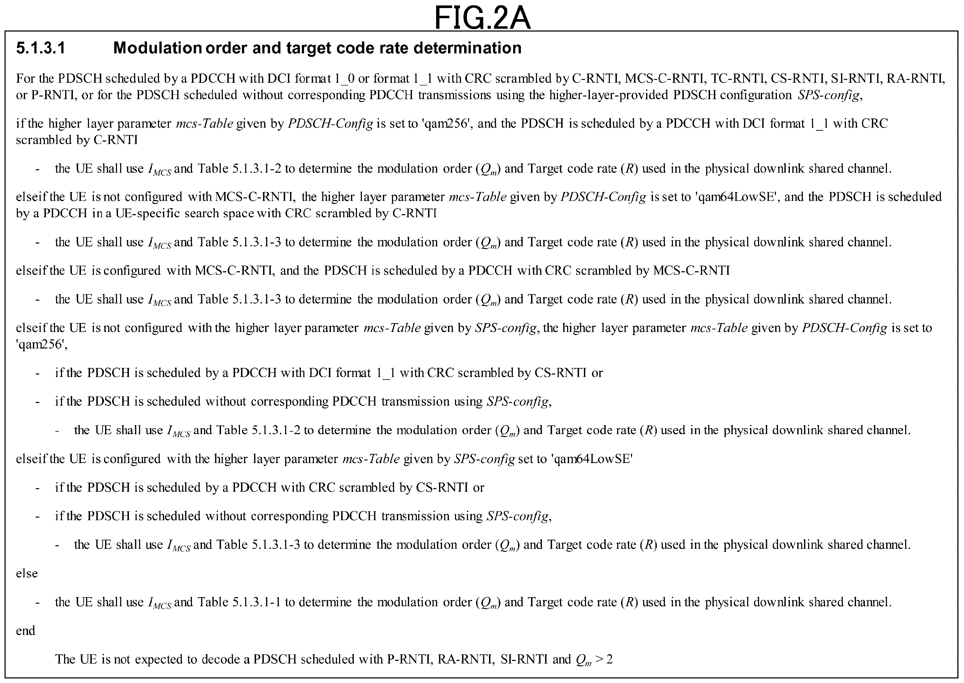

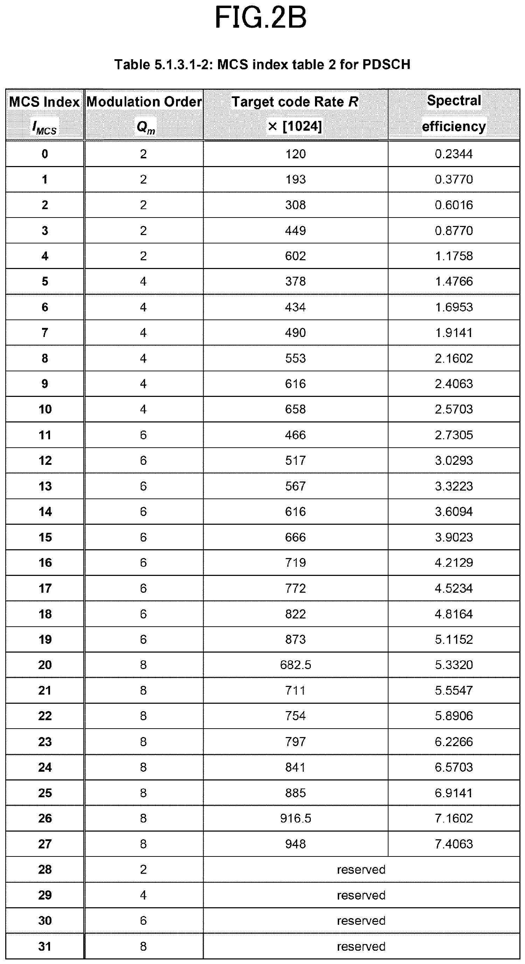

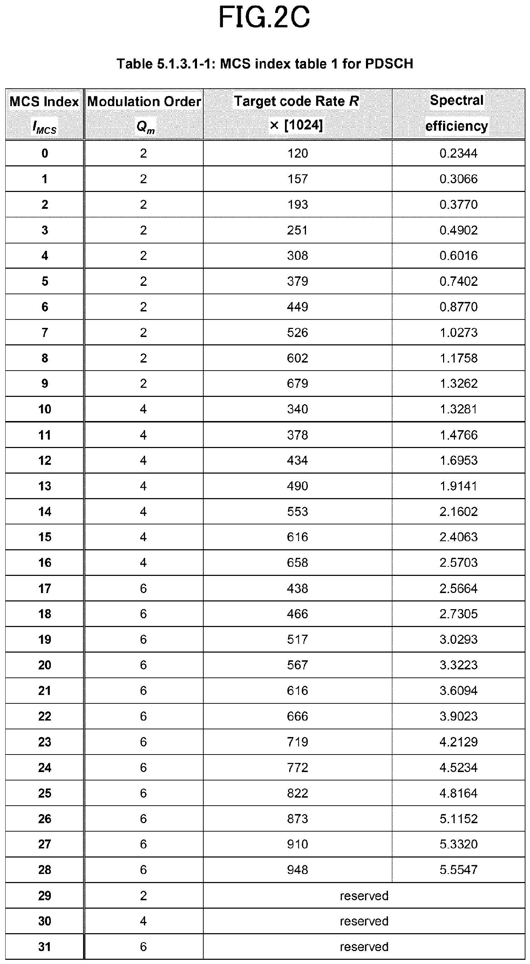

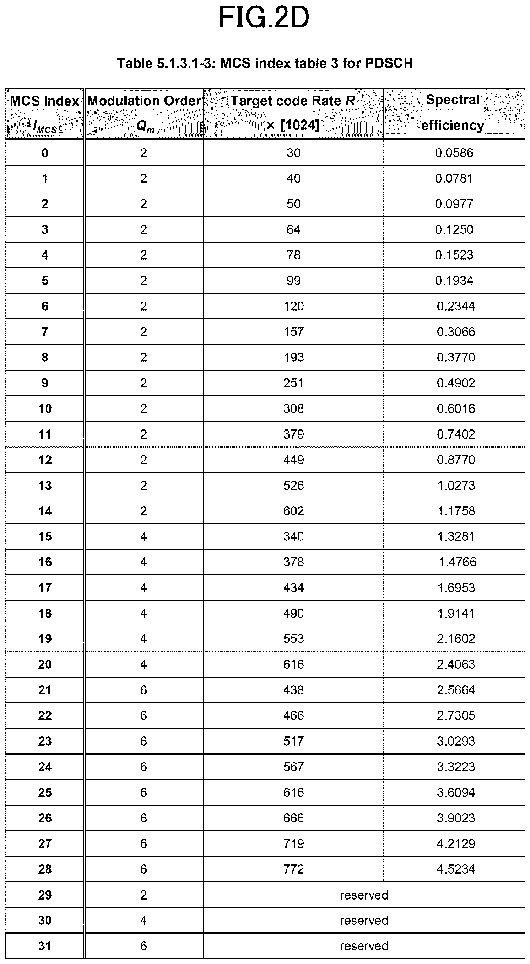

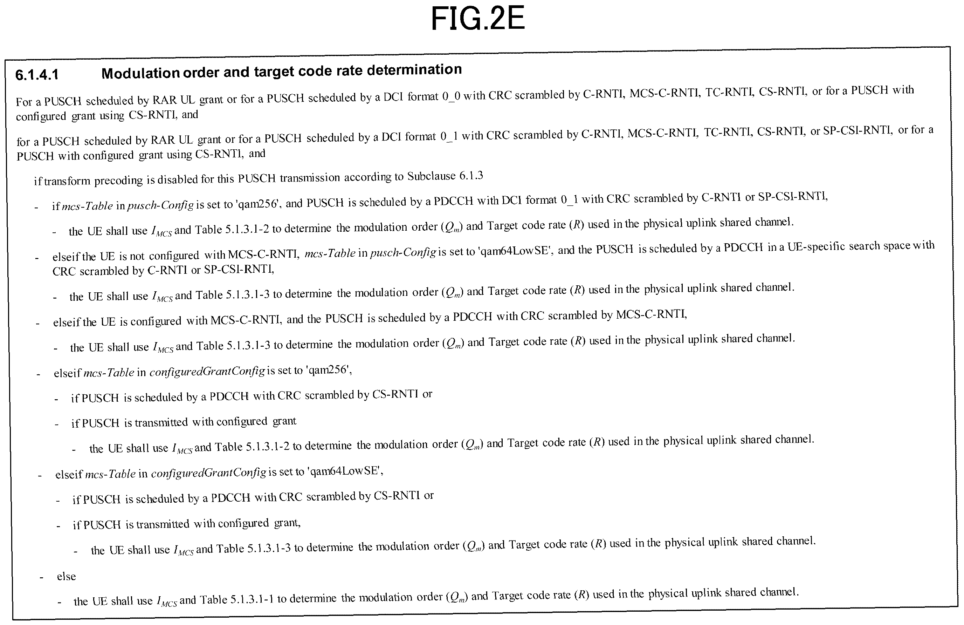

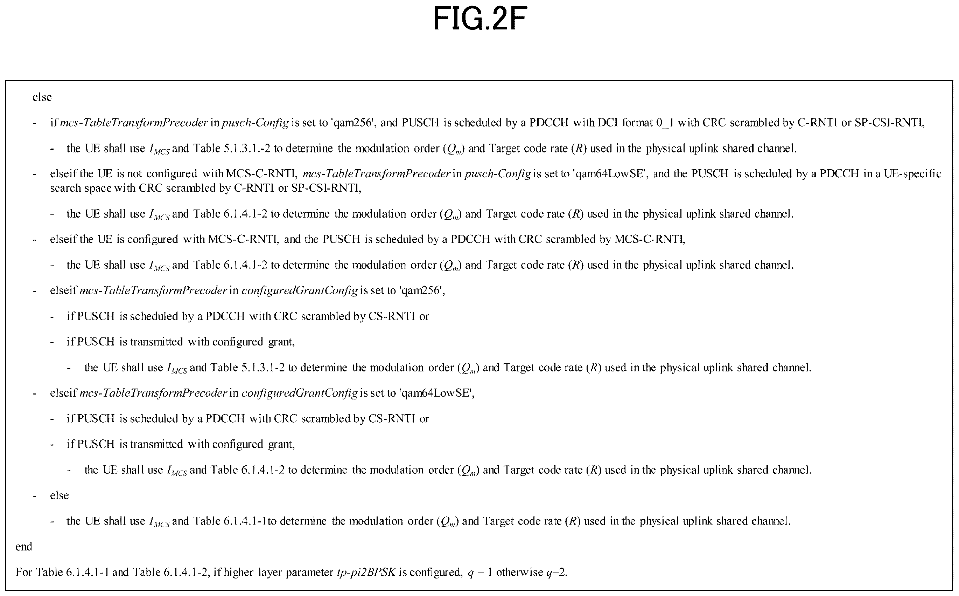

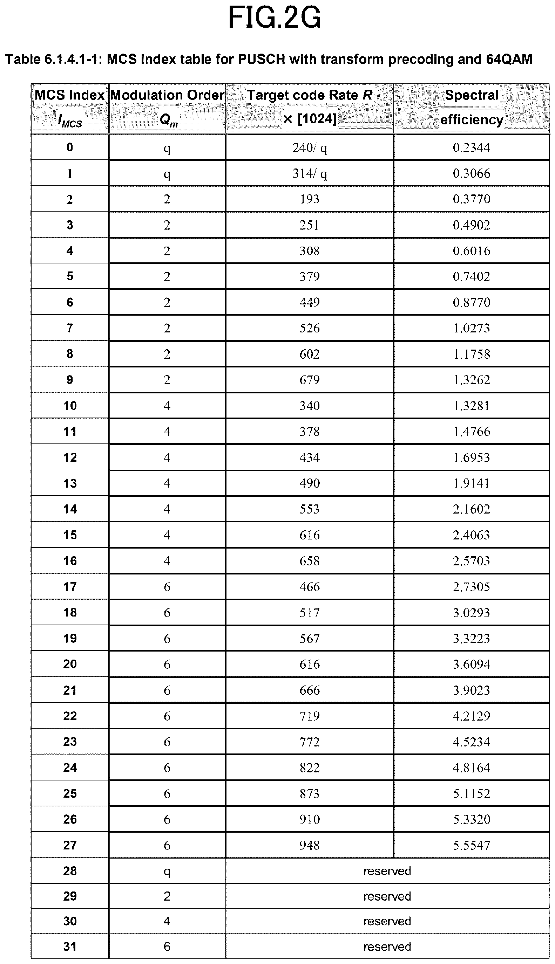

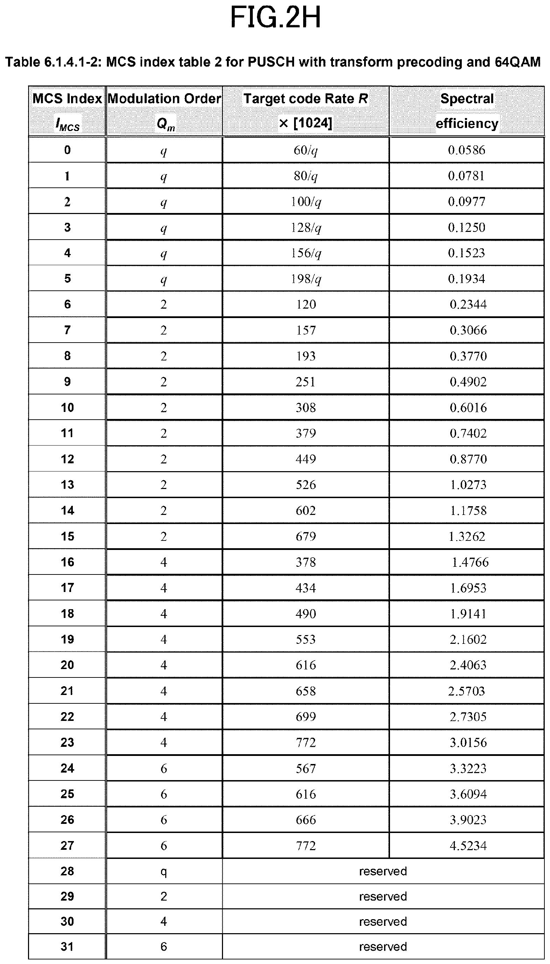

Fig. 2A, Fig. 2B, Fig. 2C, Fig. 2D, Fig. 2E, Fig. 2F, Fig. 2G, and Fig. 2H are drawings illustrating MCS tables used for transmission of PDSCH and/or PUSCH.

As shown in Fig. 2B, Fig. 2C, Fig. 2D, Fig. 2G, and Fig. 2H, the MCS tables used for transmitting PDSCH and PUSCH include tables containing modulation schemes from QPSK (Quadrature Phase Shift keying) to 64 QAM (Quadrature Amplitude Modulation), tables containing modulation schemes from QPSK to 256 QAM, and tables suitable for reliable low-delay communication. The MCS tables include an MCS index (I_{MCS}), a modulation order (Qₘ), a target code rate (R), and spectral efficiency. As shown in Fig. 2A, Fig. 2B, Fig. 2C, Fig. 2D, Fig. 2E, Fig. 2F, Fig. 2G, and Fig. 2H, which MCS table is used in which case is specified with respect to PDSCH/PUSCH transmission.

However, in NR-V2X sidelink (SL), how to use MCS tables is not specified.

### (Embodiment 1)

There is consideration of providing two or more MCS tables available in the NR sidelink as an embodiment 1.

One MCS table from among all MCS tables available for NR-Uu (i.e., for PDSCH/PUSCH) may be configured (set) (in advance) and used. In this case, a parameter of an upper layer may be assumed. As an example, the parameter may be defined as "PSSCH-Config" . As an example, a parameter "mcs-Table" may be included in PSSCH-Config. Alternatively, the above-described one MCS table may be configured (in advance) and used per any of the following elements.
(a) SCI format
(b) DCI (Downlink Control Information) format
(c) RNTI (Radio Network Temporary Identifier) used for scrambling CRC of SCI and/or DCI
(d) Resource allocation mode (mode 1: a mode in which a base station gNB schedules SL resources; mode 2: a mode in which a user apparatus UE autonomously selects SL resources)
(e) PSCCH/PSSCH multiplexing option
(f) Resource pool configuration

For example, in the case where an upper layer parameter mcs-Table included in PSSCH-Config is set to "aaa" and PSSCH is scheduled by PSCCH with an SCI (Sidelink Control Information) format "X" , a user apparatus 20 determines a modulation order (Qₘ) and a target code rate (R) used for PSSCH transmission by using an MCS index (I_{MCS}) and an MCS table "Y".

As a different example, plural MCS tables from among all MCS tables available for NR-Uu, may be configured (in advance), and one of the configured MCS tables may be selected or indicated. Here, the one MCS table may be: selected or indicated by an SCI format and/or a DCI (Downlink Control Information) format; selected or indicated by an RNTI (Radio Network Temporary Identifier) used for scrambling CRC of SCI and/or DCI; selected or indicated by a dedicated SCI field and /or DCI field; selected or indicated by a resource allocation mode (mode 1: a mode in which a base station gNB schedules SL resources, mode 2: a mode in which a user apparatus UE autonomously selects SL resources); selected or indicated by an option for multiplexing PSCCH/PSSCH; or selected or indicated by a resource pool configuration. It should be noted that the option for multiplexing PSCCH/PSSCH includes: a multiplexing method in which a frequency resource of PSCCH and a frequency resource of PSSCH are the same and a time resource of PSCCH and a time resource of PSSCH are not overlapped; a multiplexing method in which a frequency resource of PSCCH and a frequency resource of PSSCH are not the same and a time resource of PSCCH and a time resource of PSSCH are not overlapped; a multiplexing method in which a frequency resource of PSCCH and a frequency resource of PSSCH are not overlapped and a time resource of PSCCH and a time resource of PSSCH are the same; or the like.

As a further different example, a single MCS table from among all MCS tables available for NR-Uu may be configured (in advance), and it may be determined whether the single MCS table is used or another MCS table is used. Here, whether the single MCS table is used or another MCS table is used may be determined: by an SCI format and/or a DCI (Downlink Control Information) format; by an RNTI (Radio Network Temporary Identifier) used for scrambling CRC of SCI and/or DCI; by a dedicated SCI field and /or DCI field; by a resource allocation mode (mode 1: a mode in which a base station gNB schedules SL resources, mode 2: a mode in which a user apparatus UE autonomously selects SL resources); by an option for multiplexing PSCCH/PSSCH; or by a resource pool configuration.

As a further different example, MCS tables configured for NR-Uu may be reused for sidelink (SL).

### (Modified example of embodiment 1)

There is consideration of providing two or more MCS tables available in the NR sidelink from among MCS tables, in which some of MCS tables for NR-Uu are excluded (for example, from among MCS tables in which MCS tables including 256 QAM are excluded) as a modified example of an embodiment 1. In other words, a user apparatus 20 does not expect that the excluded MCS tables are used for NR-SL, or does not expect that the excluded MCS tables are configured/specified for NR-SL (in advance).

One MCS table, selected from among MCS tables obtained by excluding some MCS tables from all MCS tables available for NR-Uu (i.e., for PDSCH/PUSCH), may be configured (in advance) and used. In this case, a parameter of an upper layer may be assumed. As an example, the parameter may be defined as "PSSCH-Config". As an example, a parameter "mcs-Table" may be included in PSSCH-Config. Alternatively, the above-described one MCS table may be configured (in advance) and used per any of the following elements.
(a) SCI format
(b) DCI (Downlink Control Information) format
(c) RNTI (Radio Network Temporary Identifier) used for scrambling CRC of SCI and/or DCI
(d) Resource allocation mode (mode 1: a mode in which a base station gNB schedules SL resources; mode 2: a mode in which a user apparatus UE autonomously selects SL resources)
(e) PSCCH/PSSCH multiplexing option
(f) Resource pool configuration

For example, in the case where an upper layer parameter mcs-Table included in PSSCH-Config is set to "aaa" and PSSCH is scheduled by PSCCH with an SCI (Sidelink Control Information) format "X", a user apparatus 20 determines a modulation order (Qₘ) and a target code rate (R) used for PSSCH transmission by using an MCS index (I_{MCS}) and an MCS table "Y".

As a different example, plural MCS tables, which are obtained by excluding some MCS tables from all MCS tables available for NR-Uu (i.e., for PDSCH/PUSCH), may be configured (in advance), and one of the configured plural MCS tables may be selected or indicated. Here, the one MCS table may be: selected or indicated by an SCI format and/or a DCI (Downlink Control Information) format; selected or indicated by an RNTI (Radio Network Temporary Identifier) used for scrambling CRC of SCI and/or DCI; selected or indicated by a dedicated SCI field and /or DCI field; selected or indicated by a resource allocation mode (mode 1: a mode in which a base station gNB schedules SL resources, mode 2: a mode in which a user apparatus UE autonomously selects SL resources); selected or indicated by an option for multiplexing PSCCH/PSSCH; or selected or indicated by a resource pool configuration.

As a further different example, a single MCS table from among MCS tables, which are obtained by excluding some MCS tables from all MCS tables available for NR-Uu (i.e., for PDSCH/PUSCH), may be configured (in advance), and it may be determined whether the single MCS table is used or another MCS table is used. Here, whether the single MCS table is used or another MCS table is used may be determined: by an SCI format and/or a DCI (Downlink Control Information) format; by an RNTI (Radio Network Temporary Identifier) used for scrambling CRC of SCI and/or DCI; by a dedicated SCI field and/or DCI field; by a resource allocation mode (mode 1: a mode in which a base station gNB schedules SL resources, mode 2: a mode in which a user apparatus UE autonomously selects SL resources); by an option for multiplexing PSCCH/PSSCH; or by a resource pool configuration.

As a different example, in the case where predetermined MCS tables are included in MCS tables in which some of MCS tables are excluded from all MCS tables available for NR-Uu (i.e., for PDSCH/PUSCH), the predetermined MCS tables may be reused to be applied to the sidelink (SL). In the case where the predetermined MCS tables are not included in MCS tables in which some of MCS tables are excluded from all MCS tables available for NR-Uu (i.e., for PDSCH/PUSCH), a specific MCS table included in the MCS tables in which some of MCS tables are excluded from all MCS tables available for NR-Uu (i.e., for PDSCH/PUSCH) may be applied to the sidelink (SL).

### (Embodiment 2)

There is consideration of providing only one MCS table available in the NR sidelink as an embodiment 2.

Regarding which MCS table is used, with respect to PSSCH scheduled by PSCCH with an SCI format "X" , a user apparatus 20 determines a modulation order (Qₘ) and a target code rate (R) used for PSSCH transmission by using an MCS index (I_{MCS}) and an MCS table "Y" indicated by PSCCH with an SCI format "X".

As a different example, with respect to PSSCH scheduled by PSCCH with an SCI format "X" with CRC scrambled by Z (e.g., SL-V-RNTI), a user apparatus 20 may determine a modulation order (Qₘ) and a target code rate (R) used for PSSCH transmission by using an MCS index (I_{MCS}) and an MCS table "Y" indicated by PSCCH with an SCI format "X" with CRC scrambled by Z (e.g., SL-V-RNTI).

As a different example, with respect to PSSCH scheduled by PSCCH with an SCI format "X" scheduled by PDCCH with a DCI format P, a modulation order (Qₘ) and a target code rate (R) used for PSSCH transmission may be determined by using an MCS index (I_{MCS}) and an MCS table "Y" indicated by PSCCH with an SCI format "X" scheduled by PDCCH with a DCI format P.

As a different example, with respect to PSSCH scheduled by PSCCH with an SCI format "X" with CRC scrambled by Z (e.g., SL-V-RNTI) scheduled by PDCCH with a DCI format P with CRC scrambled by Q (e.g., SL-V-RNTI), a modulation order (Qₘ) and a target code rate (R) used for PSSCH transmission may be determined by using an MCS index (I_{MCS}) and an MCS table "Y" indicated by PSCCH with an SCI format "X" with CRC scrambled by Z (e.g., SL-V-RNTI) scheduled by PDCCH with DCI format P with CRC scrambled by Q (e.g., SL-V-RNTI).

It should be noted that the MCS table can be applied to PSCCH and/or PSSCH and/or PSFCH (Physical Sidelink Feedback Channel) and/or other sidelink channels.

### (Effects)

According to the above-described embodiments of the present invention, it is possible for a user apparatus 20 to determine which MCS table is to be used.

According to the embodiment 1, it is possible to switch the MCS table based on a channel condition and/or determination of the user apparatus.

According to a modified example of the embodiment 1, some of the MCS tables are excluded, and thus, for example, it is possible to reduce the amount of implementation tests of a user apparatus 20.

According to the embodiment 2, only one MCS table is available, and thus, it is not necessary for a user apparatus 20 to take into account configurations or switching, and specifications of the user apparatus 20 may be simpler.

### (Apparatus structure)

Next, examples of functional structures of the base station apparatus 10 and the user apparatus 20 that perform the processes and operations described above will be described. The base station apparatus 10 and the user apparatus 20 each have functions for performing an embodiment of the present invention. It should be noted that the base station apparatus 10 and the user apparatus 20 each may have only a part of the functions for performing an embodiment of the present invention.

### <Base station apparatus 10>

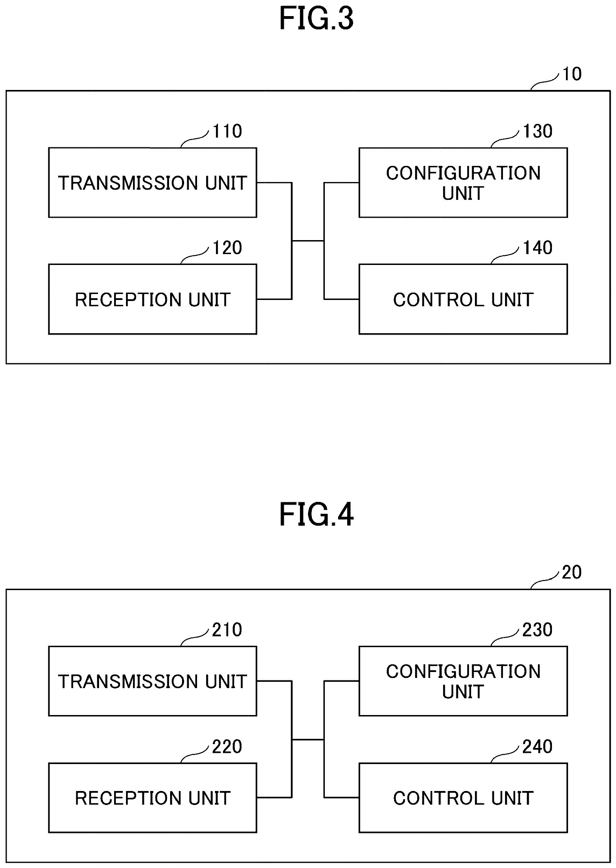

Fig. 3 is a drawing illustrating an example of the functional structure of a base station apparatus 10. As illustrated in Fig. 3, the base station apparatus 10 includes a transmission unit 110, a reception unit 120, a configuration unit (setting unit) 130, and a control unit 140. The functional structure illustrated in Fig. 3 is merely an example. Functional divisions and names of functional units may be anything as long as it can perform operations according to an embodiment of the present invention.

The transmission unit 110 has a function of generating a signal to be transmitted to the user apparatus 20 and for transmitting the signal wirelessly. Further, transmission unit 110 transmits information such as SL scheduling to the user apparatus 20. The reception unit 120 has a function of receiving various signals transmitted from the user apparatus 20 and for obtaining, for example, upper layer information from the received signals.

The configuration unit 130 stores, in a storage device, pre-configured configuration information and various configuration information items to be transmitted to the user apparatus 20, and reads them from the storage device if necessary. Contents of the configuration information are, for example, information related to configuration of V2X, etc.

The control unit 140 performs processing related to configuration used for V2X performed by the user apparatus 20, as described in an embodiment of the present invention. Further, the functional units related to signal transmission in the control unit 140 may be included in the transmission unit 110, and the functional units related to signal reception in the control unit 140 may be included in the reception unit 120.

### <User apparatus 20>

Fig. 4 is a drawing illustrating an example of the functional structure of a user apparatus 20. As illustrated in Fig. 4, the user apparatus 20 includes a transmission unit 210, a reception unit 220, a setting unit 230, and a control unit 240. The functional structure illustrated in Fig. 4 is merely an example. Functional divisions and names of functional units may be anything as long as it can perform operations according to an embodiment of the present invention.

The transmission unit 210 generates a transmission signal from transmission data and transmits the transmission signal wirelessly. The reception unit 220 receives various signals wirelessly and obtains upper layer signals from the received physical layer signals. Further, the reception unit 220 has functions for receiving SL scheduling that is transmitted from the base station apparatus 10. The reception unit 220 has functions for receiving a scheduling grant that is transmitted from other user apparatuses. For example, with respect to V2X, the transmission unit 210 transmits a scheduling request, etc., to other user apparatus 20, and the reception unit 120 receives a scheduling grant, etc., from other user apparatus 20.

The configuration unit 230 stores, in a storage device, various configuration information items received from the base station apparatus 10 or the user apparatus 20 via the reception unit 220, and reads them from the storage device if necessary. Further, the configuration unit 230 also stores pre-configured configuration information. Contents of the configuration information are, for example, information related to V2X and HARQ processes, etc.

The control unit 240 controls D2D communication with another user apparatus 20 as described in an embodiment of the present invention. Further, the control unit 240 executes V2X and HARQ processes. The functional units related to signal transmission in the control unit 240 may be included in the transmission unit 210, and the functional units related to signal reception in the control unit 240 may be included in the reception unit 220.

### (Hardware structure)

In the above functional structure diagrams used for describing an embodiment of the present invention (Fig. 3 and Fig. 4), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless).

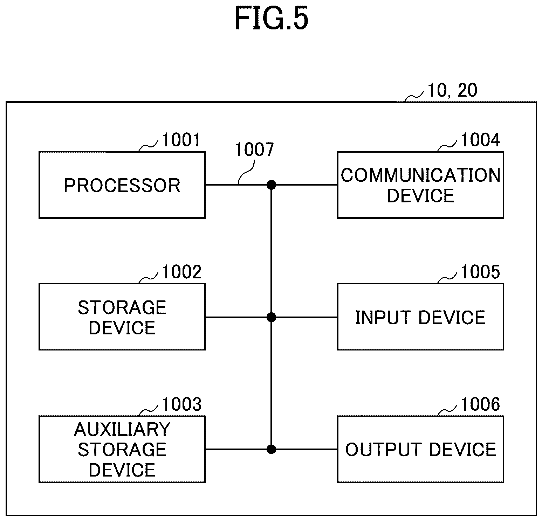

Further, for example, a base station apparatus 10 and a user apparatus 20 according to an embodiment of the present invention may function as computers that perform processes according to an embodiment of the present invention. Fig. 5 is a drawing illustrating an example of a hardware structure of a wireless communication apparatus that is a base station apparatus 10 or a user apparatus 20 according to an embodiment of the present invention. Each of the base station apparatus 10 and the user apparatus 20 may be physically a computer apparatus including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station apparatus 10 and the user apparatus 20 may include one or more of each of the apparatuses indicated by 1001 to 1006 illustrated in the figure, or may not include some apparatuses.

Each of the functions of the base station apparatus 10 and the user apparatus 20 may be implemented by causing predetermined software (program) to be read by hardware such as the processor 1001, the storage device 1002, or the etc., by causing the processor 1001 to perform calculations, and by causing the processor 1001 to control communications by the communication device 1004, and to control reading and/or writing data by the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc.

Further, the processor 1001 reads a program (program code), a software module, or data from the auxiliary storage device 1003 and/or the communication device 1004, writes the program, the software module, or the data to the storage device 1002, and performs various processes according to the program, the software module, or the data. As the program, a program is used that causes the computer to perform at least a part of operations according to an embodiment of the present invention described above. For example, the transmission unit 110, the reception unit 120, the configuration unit 130, and the control unit 140 of the base station apparatus 10 illustrated in Fig. 3 may be realized by control programs that are stored in the storage device 1002 and are executed by the processor 1001. Further, for example, the transmission unit 210, the reception unit 220, the configuration unit 230, and the control unit 240 of the user apparatus 20 illustrated in Fig. 4 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 may be a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is enabled to store programs (program codes), software modules, or the etc., that are executable for performing processes according to an embodiment of the present invention.

The auxiliary storage device 1003 is a computer-readable recording medium, and may be at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The auxiliary storage device 1003 may be referred to as an auxiliary storage apparatus. The above recording medium may be a database including the storage device 1002 and/or the auxiliary storage device 1003, a server, or any other appropriate medium.

The communication device 1004 is hardware (transmission and reception device) for communicating with computers via a wired and/or wireless network, and may be referred to as a network device, a network controller, a network card, a communication module, etc. For example, the transmission unit 110 and the reception unit 120 of the base station apparatus 10 may be realized by the communication device 1004. Further, the transmission unit 210 and the reception unit 220 of the user apparatus 20 may be realized by the communication device 1004.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station apparatus 10 and the user apparatus 20 may include hardware such as a micro-processor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

### (Embodiment summary)

As described above, according to the embodiments of the present invention, a user apparatus is provided. The user apparatus includes a control unit configured to determine an MCS table and a transmission unit configured to perform sidelink transmission in accordance with the MCS table.

According to the above arrangement, a technique is provided. The technique specifies how to use MCS tables in direct communications between terminals.

### (Supplement of embodiment)

One or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The features that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, a base station apparatus 10 and a user apparatus 20 have been described by using functional block diagrams. However, the apparatuses may be realized by hardware, software, or a combination of hardware and software. The software executed by a processor included in a base station apparatus 10 according to an embodiment of the present invention and the software executed by a processor included in a user apparatus 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information transmission (notification, reporting) may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC signaling, MAC signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

An aspect/embodiment described in the present specification may be applied to a system that uses LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), other appropriate systems, and/or a next generation system enhanced based thereon.

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station apparatus 10 in the present specification, may be performed by an upper node in some cases. In a network including one or more network nodes including a base station apparatus 10, it is apparent that various operations performed for communicating with a user apparatus 20 may be performed by the base station apparatus 10 and/or another network node other than the base station apparatus 10 (for example, but not limited to, MME or S-GW). According to the above, a case is described in which there is a single network node other than the base station apparatus 10. However, a combination of multiple other network nodes may be considered (e.g., MME and S-GW).

An aspect/embodiment described in the present specification may be used independently, may be used in combination, or may be used by switching according to operations.

There are cases in which the user apparatus 20 may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

There are cases in which the base station apparatus 10 may be referred to, by a person skilled in the art, as a NB (NodeB), an eNB (evolved NodeB), a gNB, a base station, or some other appropriate terms.

As used herein, the term "determining" may encompasses a wide variety of actions. The "determining" may include, for example, a case in which "judging", "calculating", "computing", "processing", "deriving", "investigating", "looking up" (e.g., looking up a table, database, or other data structures), or "ascertaining" is deemed as "determining". Also, "determining" may include a case in which "receiving" (e.g., receiving information), "transmitting" (e.g., transmitting information), "inputting", "outputting", etc. "accessing" (e.g., accessing data in a memory) is deemed as "determining". Further, the "determining" may include a case in which "resolving", "selecting", "choosing", "establishing", "comparing", or the etc. is deemed as "determining". In other words, the "determining" may include a case in which a certain action or operation is deemed as "determining".

The description "based on" used in the present specification does not mean "based on only" unless otherwise specifically noted. In other words, the phrase "base on" means both "based on only" and "based on at least".

When the terms "include", "including", and variations thereof are used in the present specification or in the claims, the terms are intended to be non-restrictive (to be considered "open terminology") the same as the term "comprising". Further, the term "or" used in the present specification or in the claims is intended to be not an "exclusive or".

Throughout the present specification, in the case where articles "a", "an", and "the" are added to a noun as a result of translation, unless otherwise indicated, the noun may be plural.

It should be noted that, in an embodiment of the present invention, a resource request is an example of a scheduling request, a resource grant is an example of a scheduling grant, and a scheduling user apparatus is an example of a header user apparatus.

As described above, the present invention has been described in detail. It should be apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. In other words, the descriptions of the present specification are for illustrative purposes only, and are not intended to be limitations to the present invention.

### [DESCRIPTION OF THE REFERENCE NUMERALS]

- 10: Base station apparatus
- 110: Transmission unit
- 120: Reception unit
- 130: Setting unit
- 140: Control unit
- 20: User apparatus
- 210: Transmission unit
- 220: Reception unit
- 230: Setting unit
- 240: Control unit
- 1001: Processor
- 1002: Storage apparatus
- 1003: Auxiliary storage apparatus
- 1004: Communication apparatus
- 1005: Input apparatus
- 1006: Output apparatus

## Claims

1. A user apparatus comprising:
a control unit configured to determine an MCS (Modulation and Coding Scheme) table; and
a transmission unit configured to perform sidelink transmission in accordance with the MCS table.

2. The user apparatus according to claim 1, wherein the MCS table is determined from among two or more MCS tables available for the sidelink transmission.

3. The user apparatus according to claim 1, wherein the MCS table is determined from among two or more MCS tables available for the sidelink transmission excluding a predetermined MCS table.

4. The user apparatus according to claim 1, wherein the MCS table is only one MCS table available for the sidelink transmission.

5. A communication method of a user apparatus, the communication method comprising:
determining an MCS table; and
performing sidelink transmission in accordance with the MCS table.
